# FASCICULE DE BREVET EUROPEEN

(11) **EP 3 071 976 B1**
(45) Date de publication et mention de la délivrance du brevet: **13.09.2017**
(21) Numéro de dépôt: 14793472.3
(22) Date de dépôt: 21.10.2014
(51) Int. Cl.: G01P 15/097, G01P 15/08, G01P 15/125

(54) **CAPTEUR A ELEMENT SENSIBLE MOBILE AYANT UN FONCTIONNEMENT MIXTE VIBRANT ET PENDULAIRE, ET PROCEDES DE COMMANDE D'UN TEL CAPTEUR**
SENSOR MIT BEWEGLICHEM EMPFINDLICHEM ELEMENT MIT GEMISCHTEM VIBRIERENDEM UND PENDELARTIGEM BETRIEB UND VERFAHREN ZUR STEUERUNG SOLCH EINES SENSORS
SENSOR WITH MOVING SENSITIVE ELEMENT HAVING MIXED VIBRATING AND PENDULAR OPERATION, AND METHODS FOR CONTROLLING SUCH A SENSOR

(30) Priorité: 20.11.2013 FR 1361433
(43) Date de publication de la demande: 28.09.2016
(73) Titulaire: Safran Electronics & Defense, 92100 Boulogne-Billancourt (FR)
(72) Inventeur: JEANROY, Alain, F-92100 Boulogne-Billancourt (FR)
(74) Mandataire: Lavialle, Bruno François Stéphane
(86) Numéro de dépôt international: PCT/EP2014/072580
(87) Numéro de publication internationale: WO 2015/074817

(56) Documents cités:
- EP-A1- 2 339 293
- FR-A1- 2 983 574
- US-A1- 2011 079 079

## Description

La présente invention concerne un capteur utilisable pour la détection d'une accélération, d'une pression ou plus généralement de toute grandeur physique dont la variation peut provoquer le déplacement d'un corps mobile par rapport à un bâti. L'invention est plus particulièrement utilisable en application à un capteur inertiel d'accélération et notamment un capteur de type MEMS.

Un capteur d'accélération à résonateur vibrant comprend généralement un corps sismique (ou masse d'épreuve) relié à un support par un élément vibrant généralement sous la forme d'une poutre s'étendant selon un axe sensible du capteur. Le capteur comprend des transducteurs pour mettre la poutre en vibration à la fréquence de résonance de la poutre et pour détecter des variations de la fréquence de vibration de la poutre. Sous l'effet d'une accélération appliquée au support, le corps sismique exerce sur la poutre une force axiale de compression ou de traction : il en résulte une modification de la raideur de la poutre et donc une modification de sa fréquence de résonance. De tels capteurs sont connus de FR-A1-2 983 574, EP-A1-2 339 293 et US-A1-2011/079079. La mesure d'accélération est ainsi déduite d'une faible variation de la fréquence propre de la poutre d'où découle un biais de mesure relativement important. En effet, sous l'effet de l'accélération, une force est appliquée au résonateur et modifie la fréquence de résonance de celui-ci : la déformation résultant est relativement faible et s'apparente aux déformations parasites engendrées par les variations de températures ou la relaxation des contraintes dans les assemblages.

Pour éliminer ce biais et autres effets indésirables de mode commun (non linéarité, sensibilité thermique...), les mesures sont effectuées en différentiel en remplaçant la poutre unique par deux poutres en diapason subissant des contraintes de signes opposés appliquées soit par un corps sismique commun aux deux poutres soit par deux corps sismiques reliés chacun à une des poutres.

Pour limiter ce biais de mesure, il a également été envisagé de mettre une raideur électrostatique en parallèle de la raideur mécanique de la poutre de telle manière que sous l'effet d'une accélération le corps sismique modifie la raideur électrostatique.

Dans un capteur conforme à ce principe, la raideur électrostatique est obtenue au moyen d'électrodes en peignes attachées à chacune des poutres vibrantes d'un diapason de telle manière que, sous l'effet d'une accélération, le corps d'épreuve modifie l'entrefer des électrodes en peigne et donc la raideur électrostatique engendrée par lesdites électrodes. La modification de la raideur entraîne une modification des fréquences de vibration des poutres. Les poutres ont des fréquences de vibration différentes et l'écart entre les deux fréquences est la mesure de l'accélération.

La plus grande amplitude des variations permet alors une diminution du biais de mesure.

Un but de l'invention est de fournir un moyen permettant d'améliorer encore les performances des capteurs.

A cet effet, on prévoit, selon l'invention, un capteur comprenant : un bâti ; un premier corps relié au bâti pour être mobile selon un axe sensible par des premiers moyens de suspension définissant un plan de suspension ; deux résonateurs qui sont disposés symétriquement par rapport au premier corps le long de l'axe sensible et qui comportent chacun une paire de deuxièmes corps, reliés chacun au bâti par des deuxièmes moyens de suspension pour être mobile selon un axe de vibration sensiblement perpendiculaire à l'axe sensible et l'un à l'autre par des troisièmes moyens de suspension ; des organes transducteurs reliés à une unité de commande pour détecter une position du premier corps par rapport au bâti, mettre en vibration les deuxièmes corps selon l'axe de vibration et détecter une fréquence de vibration des deuxièmes corps ; et des moyens de couplage électrostatique surfacique reliant chaque deuxième corps au premier corps de telle manière qu'un déplacement du premier corps par rapport au bâti le long de l'axe sensible provoque un accroissement du couplage électrostatique pour une des paires de deuxièmes corps et une diminution du couplage électrostatique pour l'autre des paires de deuxièmes corps.

Ainsi, ces résonateurs ont une masse modale et une surtension relativement importantes, et une fréquence de résonance relativement basse. Lorsque le premier corps se déplace sous l'effet d'une sollicitation extérieure, il provoque un accroissement de la raideur électrostatique d'un des résonateurs et une diminution de la raideur électrostatique de l'autre des résonateurs, engendrant par la même l'augmentation de la fréquence de résonance de l'un des résonateurs et la diminution de la fréquence de résonance de l'autre des résonateurs. L'obtention de la variation de la raideur électrostatique par un déplacement rend en outre le capteur moins sensible à la température ou à la relaxation des contraintes d'assemblage que si cette variation résultait de l'application d'une force. L'agencement du capteur avec un premier corps unique dont le déplacement provoque une variation de la fréquence de vibration des résonateurs permet d'avoir une entrée unique tout en ayant pour un même encombrement une masse d'épreuve relativement importante pour chacun des deux résonateurs. Cet agencement permet également d'avoir des moyens de couplage électrostatique surfacique, c'est-à-dire que le déplacement du premier corps va entraîner une variation de surface engendrant une variation du couplage électrostatique, cette variation étant plus linéaire au premier ordre qu'une variation d'entrefer et donc plus facilement exploitable. Il en résulte une amélioration des performances du capteur. La mesure du déplacement du premier corps est également représentative de la sollicitation extérieure. Le capteur selon l'invention incorpore de la sorte un mode de fonctionnement pendulaire et un mode de fonctionnement vibrant, ce qui peut permettre notamment une redondance de mesure. Le capteur selon l'invention présente de la sorte une fonctionnalité supplémentaire procurée par le premier corps en combinaison avec les transducteurs qui autorisent le mode de fonctionnement pendulaire en boucle ouverte susceptible de fournir des mesures permettant d'améliorer encore les performances du capteur.

L'invention a également pour objet un premier procédé de commande d'un tel capteur. Ce procédé comprend l'étape de détecter un déplacement du premier corps pour déterminer une première valeur de mesure, et l'étape de détecter une variation de la fréquence des résonateurs pour déterminer une deuxième valeur de mesure.

On dispose ainsi de deux valeurs obtenues via un mode de fonctionnement pendulaire pour la première et un mode de fonctionnement vibrant pour la deuxième. Or, ces deux modes de fonctionnement ne sont pas sensibles aux mêmes perturbations de sorte qu'il peut être intéressant de privilégier l'un ou l'autre des modes de fonctionnement en fonction des conditions extérieures.

Selon un mode d'exploitation basique de ces valeurs à mesurer, le procédé comprend l'étape de retenir comme valeur finale de mesure une moyenne de la première valeur de mesure et de la deuxième valeur de mesure.

L'invention a en outre pour objet un deuxième procédé de commande d'un capteur. Ce procédé comprend l'étape de provoquer un mouvement prédéterminé du premier corps et l'étape de traiter un signal en provenance des organes transducteurs des résonateurs pour déterminer une valeur de mesure.

Il est ainsi possible d'effectuer une calibration et/ou un test du capteur.

D'autres caractéristiques et avantages de l'invention ressortiront à la lecture de la description qui suit de modes de réalisation particuliers non limitatifs de l'invention.

Il sera fait référence aux dessins annexés, parmi lesquels :

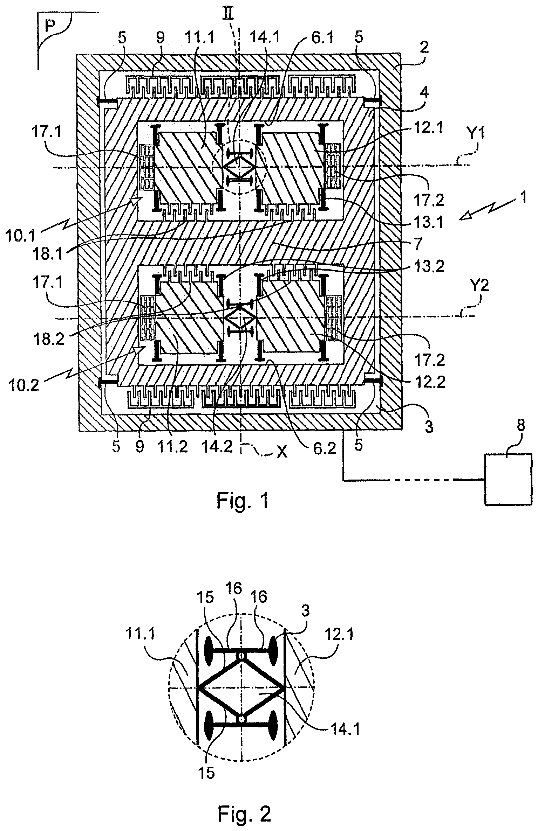

- la figure 1 est une vue schématique de dessus d'un capteur selon l'invention ;
- la figure 2 est une vue agrandie de détail de la zone II de la figure 1.

L'invention est ici décrite en application à la mesure d'accélération. Il va de soi que l'invention n'est cependant pas limitée à cette application.

Le capteur de l'invention est ici de type MEMS et est fabriqué par gravure de galettes (« wafers ») comprenant au moins une couche semi-conductrice et une couche électriquement conductrice séparée par une couche électriquement isolante (wafers dits SOI pour « Silicium On Insulator »). Ce mode de fabrication est connu en lui-même.

Le capteur selon l'invention comprend un bâti généralement désigné en 1. Le bâti 1 comprend une paroi latérale 2 en forme de cadre rectangulaire surmontant un fond 3.

Un premier corps 4, qui est ici un corps dit sismique, est monté sur le bâti par l'intermédiaire de premiers moyens de suspension 5 reliant le corps 4 à la paroi latérale 2 du bâti 1. Les moyens de suspension 5 définissent un plan de suspension P et sont agencés pour que le corps 4 soit mobile selon un axe sensible X contenu dans le plan de suspension P.

Le corps 4 a la forme d'une plaque rectangulaire dans laquelle sont ménagées deux cavités 6.1, 6.2, de forme rectangulaire, qui sont alignées l'une par rapport à l'autre sur l'axe sensible X et qui sont séparées l'une de l'autre par une portion 7.

Deux résonateurs généralement désignés en 10.1, 10.2 sont reçus chacun dans une des cavités 6.1, 6.2 et sont donc disposés symétriquement par rapport au corps sismique 4 le long de l'axe sensible X.

Chaque résonateur 10.1, 10.2 comporte une paire de deuxièmes corps 11.1, 12.1, 11.2, 12.2, reliés chacun au fond 3 du bâti 1 par des deuxièmes moyens de suspension 13.1, 13.2. Les deuxièmes moyens de suspension 13.1, 13.2 sont agencés pour que chacun des corps 11.1, 12.1, 11.2, 12.2 puisse vibrer selon un axe de vibration Y.1, Y.2 sensiblement perpendiculaire à l'axe sensible X. Les corps 11.1, 12.1 sont reliés l'un à l'autre par des troisièmes moyens de suspension 14.1. Les corps 11.2, 12.2 sont reliés l'un à l'autre par des troisièmes moyens de suspension 14.2. Les corps et les moyens de suspension sont agencés de telle manière que le corps 4 et les moyens de suspension 5 aient une fréquence propre de l'ordre de 1 kHz à 3 kHz environ, et les résonateurs 10.1 et 10.2 aient une fréquence propre supérieure ici comprise entre 10 kHz à 20 kHz environ.

Les moyens de suspensions sont formés de lamelles élastiquement déformables parallèlement au plan de suspension P, mais qui présentent une raideur élevée selon l'axe normal au plan de suspension P pour supprimer les degrés de liberté des corps hors du plan de suspension P. Les troisièmes moyens de suspension 14.1, 14.2 comprennent des lames élastiquement déformables 15 agencées en un losange ayant une première diagonale qui est parallèle à l'axe de vibration Y et qui est définie par des premiers sommets reliés aux corps 11.1, 12.1 et une deuxième diagonale qui est parallèle à l'axe sensible et qui est définie par des deuxièmes sommets reliés au fond 3 du bâti 1 par des lamelles 16 formant biellettes de telle manière que les deuxièmes sommets soient mobiles uniquement le long de l'axe sensible X.

Le capteur comprend des organes transducteurs reliés à une unité de commande 8.

Des premiers organes transducteurs 9 sont montés entre la paroi latérale 2 du bâti 1 et le premier corps 4 et sont agencés, de façon connue en elle-même, pour détecter une position du premier corps 4 par rapport au bâti 1 et pour déplacer le premier corps 4 par rapport au bâti 1. Les mêmes organes transducteurs peuvent être pilotés pour exercer alternativement ces deux fonctions, ou un organe transducteur peut être dédié à la fonction de déplacement et un organe transducteur peut être dédié à la fonction de détection.

Des deuxièmes organes transducteurs 17.1, 17.2 sont montés entre chacun des deuxièmes corps 11.1, 12.1, 11.2, 12.2 le fond 3 du bâti 1 et sont agencés, de façon connue en elle-même, pour mettre en vibration les deuxièmes corps 11.1, 12.1, 11.2, 12.2 selon l'axe de vibration Y.1, Y.2 et détecter une fréquence de vibration des deuxièmes corps 11.1, 12.1, 11.2, 12.2. Les mêmes organes transducteurs peuvent être pilotés pour exercer alternativement ces deux fonctions, ou un organe transducteur peut être dédié à la fonction de mise en vibration et un organe transducteur peut être dédié à la fonction de détection.

Les organes transducteurs sont réalisés sous la forme d'électrodes en peignes.

Le capteur comprend en outre des moyens de couplage électrostatique surfacique reliant chaque deuxième corps 11.1, 12.1, 11.2, 12.2 au premier corps 4 de telle manière qu'un déplacement du premier corps 4 par rapport au bâti 1 le long de l'axe sensible X provoque un accroissement du couplage électrostatique pour une des paires de deuxièmes corps 11.1, 12.1, 11.2, 12.2 et une diminution du couplage électrostatique pour l'autre des paires de deuxièmes corps 11.1, 12.1, 11.2, 12.2.

Les moyens de couplage électrostatique surfacique 18.1, 18.2 sont montés entre ladite portion 7 et les deuxièmes corps 11.1, 12.1, 11.2, 12.2 et ont la forme d'électrodes en peignes dont les dents s'étendent parallèlement à l'axe sensible X. Chacun des deuxièmes corps 11.1, 12.1, 11.2, 12.2 est ainsi pourvu d'une des électrodes en peigne et la portion 7 comprend elle aussi une électrode en peigne en regard de chaque électrode en peigne des deuxièmes corps 11.1, 12.1, 11.2, 12.2 de manière que les dents des électrodes en regard soient intercalées les unes entre les autres. Les dents de deux électrodes en peigne en regard l'une de l'autre présentent donc des surfaces en regard qui sont parallèles à l'axe sensible X et qui définissent la valeur du couplage électrostatique procuré par lesdites électrodes lorsqu'elles sont soumises à une tension électrique. En cas de déplacement de la portion 7 par rapport au bâti 1, la surface des dents en regard augmente ou diminue, selon le résonateur considéré, entraînant une augmentation ou une diminution du couplage électrostatique, et donc de la raideur, du résonateur considéré.

Les électrodes des transducteurs et les électrodes des moyens de couplage électrostatique sont connectées à au moins une source de tension électrique par des moyens de liaison qui sont pilotés par l'unité de commande 8 pour sélectivement mettre sous tension lesdites électrodes. Ces moyens de liaison et la source de tension sont connus en eux-mêmes et ne sont pas plus détaillés ici.

On comprend que, sous l'effet d'une accélération appliquée au bâti 1, le premier corps 4 va se déplacer, provoquant une variation du couplage électrostatique (et donc une variation de la raideur électrostatique des résonateurs 10.1, 10.2) qui conduit à une variation de la fréquence de résonance des résonateurs 10.1, 10.2.

L'unité de commande 8 comprend, de façon connue en elle-même, une mémoire contenant un programme informatique et un processeur agencé pour exécuter ledit programme. Ce programme permet la mise en oeuvre de procédés de commande du capteur.

Ainsi, l'invention concerne également des procédés de commande de ce capteur fixé par exemple dans un véhicule avec d'autres capteurs pour fournir des mesures à une centrale de navigation ou une centrale de pilotage du véhicule.

Un premier de ces procédés comprend les étapes de :
- détecter un déplacement du premier corps 4 au moyen des premiers organes transducteurs 9 pour déterminer une première valeur d'accélération,
- détecter une variation de la fréquence des résonateurs 10.1, 10.2 au moyen des deuxièmes transducteurs 17.1, 17.2 pour déterminer une deuxième valeur d'accélération.

Ainsi, la première valeur est obtenue en utilisant le capteur comme un accéléromètre pendulaire et la deuxième valeur est obtenue en utilisant le capteur comme un accéléromètre vibrant.

Dans une version simple, le procédé comprend alors l'étape de retenir comme valeur d'accélération une moyenne de la première valeur d'accélération et de la deuxième valeur d'accélération. On notera que cette moyenne peut être calculée en pondérant au préalable les première et deuxième valeurs d'accélération. Les coefficients de pondération peuvent être fixés une fois pour toute par exemple lors d'une étape de calibration en usine pour tenir compte des performances relatives du capteur en mode pendulaire et du capteur en mode vibrant ou peuvent varier en fonction de paramètres environnementaux comme la température. Un capteur de température relié à l'unité de commande 8 est alors disposé au voisinage du capteur et l'unité de commande 8 comprend une mémoire contenant des valeurs des coefficients en fonction de la température.

L'invention concerne également un deuxième procédé de commande de ce capteur, qui permet de réaliser un test ou une calibration du capteur.

Ce procédé comprend les étapes de :
- provoquer un mouvement prédéterminé du premier corps 4 au moyen des premiers organes transducteurs 9, mouvement similaire à celui provoqué par une accélération,
- traiter un signal en provenance des deuxièmes organes transducteurs 17.1, 17.2 pour déterminer une valeur d'accélération.

Connaissant les caractéristiques du mouvement prédéterminé (à noter que les premiers organes transducteurs 9 peuvent être utilisés pour déterminer les caractéristiques réelles de ce mouvement), il est possible de déterminer le signal théorique que devrait fournir les deuxièmes organes transducteurs 17.1, 17.2 et donc une valeur théorique d'accélération. L'unité de commande 8 est programmée pour calculer cette valeur théorique d'accélération et la comparer à la valeur d'accélération déterminée à partir du signal effectivement fourni par les deuxièmes organes transducteurs 17.1, 17.2. Ceci permet de vérifier l'intégrité du capteur et notamment l'efficacité des transducteurs et la mobilité du corps 4.

L'unité de commande 8 est de préférence agencée pour déterminer, en fonction de l'écart entre les deux valeurs, un facteur correctif à appliquer à la valeur d'accélération déterminée à partir des signaux fournis par les deuxièmes organes transducteurs 17.1, 17.2. L'unité de commande 8 est aussi agencée pour utiliser le résultat de la comparaison pour mettre à jour un modèle d'erreur du capteur. En variante, le résultat de la comparaison est utilisé pour effectuer un réglage des tensions appliquées aux différentes électrodes du capteur de manière à minimiser l'écart relevé.

L'unité de commande 8 est avantageusement programmée pour mettre en oeuvre ce procédé de calibration ou de test périodiquement.

L'unité de commande 8 peut également être agencée pour commander les premiers organes transducteurs 9 de manière à filtrer des perturbations (telles que les vibrations engendrés par le porteur du capteur) et réaliser par exemple une suspension active réalisant un amortissement contrôlé du premier mode propre du premier corps 4.

Bien entendu, l'invention n'est pas limitée aux modes de réalisation décrits mais englobe toute variante entrant dans le champ de l'invention telle que définie par les revendications.

En particulier, le premier corps peut avoir d'autre forme que celle décrite et par exemple la forme d'une plaque dans laquelle est ménagée une cavité unique pour accueillir les deux résonateurs.

Le capteur de l'invention est utilisable pour la détection de toute grandeur pouvant être traduite en un déplacement du premier corps par rapport au bâti, comme une accélération, une pression ou autre.

## Revendications

1. Capteur comprenant : un bâti (1) ; un premier corps (4) relié au bâti pour être mobile selon un axe sensible (X) par des premiers moyens de suspension (5) définissant un plan de suspension (P) ; deux résonateurs (10.1, 10.2) qui sont disposés symétriquement par rapport au premier corps le long de l'axe sensible et qui comportent chacun une paire de deuxièmes corps (11.1, 12.1, 11.2, 12.2), reliés chacun au bâti par des deuxièmes moyens de suspension (13.1, 13.2) pour pouvoir vibrer selon un axe de vibration (Y.1, Y.2) sensiblement perpendiculaire à l'axe sensible et l'un à l'autre par des troisièmes moyens de suspension (14.1, 14.2) ; des organes transducteurs (9, 17.1, 17.2) reliés à une unité de commande (8) pour détecter une position du premier corps par rapport au bâti, mettre en vibration les deuxièmes corps selon l'axe de vibration et détecter une fréquence de vibration des deuxièmes corps ; et des moyens de couplage électrostatique surfacique (18.1, 18.2) reliant chaque deuxième corps au premier corps de telle manière qu'un déplacement du premier corps par rapport au bâti le long de l'axe sensible provoque un accroissement du couplage électrostatique pour une des paires de deuxièmes corps et une diminution du couplage électrostatique pour l'autre des paires de deuxièmes corps.

2. Capteur selon la revendication 1, dans lequel les résonateurs (10.1, 10.2) sont disposés de part et d'autre d'une portion (7) du premier corps, les moyens de couplage électrostatique surfacique (18.1, 18.2) étant montés entre ladite portion et les deuxièmes corps (11.1, 12.1, 11.2, 12.2).

3. Capteur selon la revendication 2, dans lequel le premier corps (4) comprend deux cavités (6.1, 6.2) qui sont alignées l'une par rapport à l'autre sur l'axe sensible (X) et qui reçoivent chacune une des paires de deuxièmes corps (11.1, 12.1, 11.2, 12.2).

4. Capteur selon la revendication 1, dans lequel les troisièmes moyens de suspension (14.1, 14.2) comprennent au moins une lame élastiquement déformable (15) conformée en losange ayant une première diagonale qui est parallèle à l'axe de vibration (X) et qui est définie par des premiers sommets reliés aux corps (11.1, 12.1, 11.2, 12.2) et une deuxième diagonale qui est parallèle à l'axe sensible et qui est définie par des deuxièmes sommets reliés au bâti (1) par des biellettes (16) de telle manière que les deuxièmes sommets soient mobiles uniquement le long de l'axe sensible.

5. Capteur selon la revendication 1, dans lequel les organes transducteurs (9) sont agencés également pour déplacer le premier corps (4).

6. Procédé de commande d'un capteur selon l'une quelconque des revendications précédentes, comprenant l'étape de détecter un déplacement du premier corps (4) du capteur pour déterminer une première valeur de mesure, l'étape de détecter une variation de la fréquence des résonateurs (10.1, 10.2) du capteur pour déterminer une deuxième valeur de mesure.

7. Procédé selon la revendication 6, comprenant l'étape de retenir comme valeur finale de mesure une moyenne de la première valeur de mesure et de la deuxième valeur de mesure.

8. Procédé de commande d'un capteur selon la revendication 5, comprenant l'étape de provoquer un mouvement prédéterminé du premier corps (4) du capteur et l'étape de traiter un signal en provenance des organes transducteurs (17.1, 17.2) des résonateurs (10.1, 10.2) du capteur pour déterminer une valeur de mesure.

## Patentansprüche

1. Sensor, umfassend: einen Rahmen (1); einen ersten Körper (4), der mit dem Rahmen verbunden ist, um entlang einer empfindlichen Achse (X) über erste Aufhängungsmittel (5), die eine Aufhängungsebene (P) definieren, beweglich zu sein; zwei Resonatoren (10.1, 10.2), die in Bezug auf den ersten Körper entlang der empfindlichen Achse symmetrisch angeordnet sind und jeweils ein Paar zweiter Körper (11.1, 12.1, 11.2, 12.2) umfassen, die jeweils über zweite Aufhängungsmittel (13.1, 13.2) mit dem Rahmen verbunden sind, um entlang einer Schwingungsachse (Y.1, Y.2), die im Wesentlichen senkrecht zur empfindlichen Achse ist, schwingen zu können, sowie miteinander über dritte Aufhängungsmittel (14.1, 14.2) verbunden sind; Wandlerelemente (9, 17.1, 17.2), die mit einer Steuereinheit (8) verbunden sind, um eine Position des ersten Körpers in Bezug auf den Rahmen zu erfassen, die zweiten Körper entlang der Schwingungsachse in Schwingung zu versetzen und eine Schwingungsfrequenz der zweiten Körper zu erfassen; sowie elektrostatische Oberflächenkopplungsmittel (18.1, 18.2), die jeden zweiten Körper derart mit dem ersten Körper verbinden, dass eine Bewegung des ersten Körpers in Bezug auf den Rahmen entlang der empfindlichen Achse eine Erhöhung der elektrostatischen Kopplung für eines der Paare von zweiten Körpern und eine Verringerung der elektrostatischen Kopplung für das andere der Paare von zweiten Körpern verursacht.

2. Sensor nach Anspruch 1, bei dem die Resonatoren (10.1, 10.2) zu beiden Seiten eines Abschnittes (7) des ersten Körpers angeordnet sind, wobei die elektrostatischen Oberflächenkopplungsmittel (18.1, 18.2) zwischen dem genannten Abschnitt und den beiden Körpern (11.1, 12.1, 11.2, 12.2) angebracht sind.

3. Sensor nach Anspruch 2, bei dem der erste Körper (4) zwei Hohlräume (6.1, 6.2) umfasst, die zueinander auf der empfindlichen Achse (X) ausgerichtet sind und die jeweils eines der Paare von zweiten Körpern (11.1, 12.1, 11.2, 12.2) aufnehmen.

4. Sensor nach Anspruch 1, bei dem die dritten Aufhängungsmittel (14.1, 14.2) mindestens eine elastisch verformbare Lamelle (15) umfassend, die die Form einer Raute hat, welche eine erste Diagonale hat, die parallel zur Schwingungsachse (X) und durch erste Eckpunkte definiert ist, die mit den Körpern (11.1, 12.1, 11.2, 12.2) verbunden sind, sowie eine zweite Diagonale, die parallel zur empfindlichen Achse und durch zweite Eckpunkte definiert ist, die mit dem Rahmen (1) derart über Stangen (16) verbunden sind, dass die zweiten Eckpunkte nur entlang der empfindlichen Achse beweglich sind.

5. Sensor nach Anspruch 1, bei dem die Wandlerelemente (9) ebenfalls ausgebildet sind, um den ersten Körper (4) zu bewegen.

6. Verfahren zum Steuern eines Sensors nach einem der vorhergehenden Ansprüche, umfassend den Schritt des Erfassens einer Bewegung des ersten Körpers (4) des Sensors, um einen ersten Messwert zu bestimmen, und den Schritt des Erfassens einer Veränderung der Frequenz der Resonatoren (10.1, 10.2) des Sensors, um einen zweiten Messwert zu bestimmen.

7. Verfahren nach Anspruch 6, umfassend den Schritt des Berücksichtigens eines Mittelwertes des ersten Messwertes und des zweiten Messwertes als endgültigen Messwert.

8. Verfahren zum Steuern eines Sensors nach Anspruch 5, umfassend den Schritt des Verursachens einer vorgegebenen Bewegung des ersten Körpers (4) des Sensors und den Schritt des Verarbeitens eines Signals aus den Wandlerelementen (17.1, 17.2) der Resonatoren (10.1, 10.2) des Sensors, um einen Messwert zu bestimmen.

## Claims

1. A sensor comprising: a stand (1); a first body (4) connected to the stand to be movable along a sensing axis (X) by first suspension means (5) defining a suspension plane (P); two resonators (10.1, 10.2) that are arranged symmetrically about the first body along the sensing axis and each of which comprises a pair of second bodies (11.1, 12.1, 11.2, 12.2) each connected to the stand by second suspension means (13.1, 13.2) in order to be capable of vibrating along a vibration axis (Y.1, Y.2) that is substantially perpendicular to the sensing axis, and that are connected to each other by third suspension means (14.1, 14.2); transducer members (9, 17.1, 17.2) connected to a control unit (8) for detecting a position of the first body relative to the stand, for setting the second bodies into vibration along the vibration axis, and for detecting respective vibration frequencies of the second bodies; and surface electrostatic coupling means (18.1, 18.2) connecting each second body to the first body in such a manner that a movement of the first body relative to the stand along the sensing axis leads to an increase in electrostatic coupling for one of the pairs of second bodies and to a decrease in electrostatic coupling for the other pair of second bodies.

2. A sensor according to claim 1, wherein the resonators (10.1, 10.2) are arranged on either side of a portion (7) of the first body, the surface electrostatic coupling means (18.1, 18.2) being mounted between said portion and the second bodies (11.1, 12.1, 11.2, 12.2).

3. A sensor according to claim 2, wherein the first body (4) has two cavities (6.1, 6.2) that are in alignment with each other on the sensing axis (X) and each of which receives one of the pairs of second bodies (11.1, 12.1, 11.2, 12.2).

4. A sensor according to claim 1, wherein the third suspension means (14.1, 14.2) comprise at least one elastically deformable strip (15) given a lozenge shape having a first diagonal that is parallel to the vibration axis (X) and that is defined by first vertices connected to the bodies (11.1, 12.1, 11.2, 12.2) and a second diagonal that is parallel to the sensing axis and that is defined by second vertices connected to the stand (1) by links (16) in such a manner that the second vertices are movable solely along the sensing axis.

5. A sensor according to claim 1, wherein the transducer members (9) are also arranged to move the first body (4).

6. A method of controlling a sensor according to any preceding claim, the method including the step of detecting a movement of the first body (4) of the sensor in order to determine a first measurement value, and the step of detecting a variation in the frequencies of the resonators (10.01, 10.02) of the sensor in order to determine a second measurement value.

7. A method according to claim 6, comprising the step of retaining as the final measurement value a mean of the first measurement value and of the second measurement value.

8. A method of controlling a sensor according to claim 5, comprising the step of causing the first body (4) of the sensor to perform a predetermined movement, and the step of processing a signal coming from the transducer members (17.1, 17.2) of the resonators (10.1, 10.2) of the sensor in order to determine a measurement value.
